# EUROPÄISCHE PATENTSCHRIFT

(11) **EP 2 846 936 B1**
(45) Veröffentlichungstag und Bekanntmachung des Hinweises auf die Patenterteilung: **13.07.2016**
(21) Anmeldenummer: 13723398.7
(22) Anmeldetag: 10.05.2013
(51) Int. Cl.: B08B 3/08, B67D 1/07, C11D 3/14, C11D 11/00, C11D 17/04, A47J 31/60, C11D 7/10, C11D 17/00

(54) **REINIGUNGSKAPSEL**
CLEANING CAPSULE
CAPSULE DE NETTOYAGE

(30) Priorität: 09.05.2012 CH 656122012
(43) Veröffentlichungstag der Anmeldung: 18.03.2015
(73) Patentinhaber: Neoreta GmbH, 9471 Buchs SG 1 (CH)
(72) Erfinder: AREGGER, Willi, CH-7304 Maienfeld (CH); NITZLNADER, Rudi, LI-9494 Schaan (LI); GRAF, Heiner, CH-9470 Buchs (CH)
(74) Vertreter: Riederer Hasler & Partner Patentanwälte AG
(86) Internationale Anmeldenummer: PCT/CH2013/000080
(87) Internationale Veröffentlichungsnummer: WO 2013/166615

(56) Entgegenhaltungen:
- EP-A1- 1 591 515
- EP-A1- 1 829 954
- US-A- 5 888 313

## Beschreibung

### Gebiet der Erfindung

Die Erfindung betrifft eine Reinigungskapsel gemäss Oberbegriff des Anspruchs 1 und die Verwendung einer Reinigungskapsel gemäss Anspruch 22.

### Stand der Technik

Vorportionierte Kaffeekapseln erfreuen sich immer grösserer Beliebtheit, da sie einfach zu handhaben sind und die dazu passenden Portionskaffeemaschinen günstig in der Anschaffung sind. Vielfach wird übersehen, dass die Kaffeemaschinen bzw. deren Brühsystem nicht nur verkalken, sondern die vom Kaffee bzw. dem Heissgetränk durchströmten Teile der Maschine, also die Brühgruppe, durch Kaffeerückstände verschmutzen. Dafür sind insbesondere die im Kaffee enthaltenen Fette bzw. nicht wasserlöslichen Inhaltsstoffe verantwortlich. Gibt es für die Entkalkung eine Vielzahl an Reinigungsmitteln, so wird die Reinigung der von Kaffee durchströmten Teile der Maschine zumeist vernachlässigt. Die Verunreinigungen beeinträchtigen den Geschmack des zubereiteten Espresso-Kaffees und sind daher für eine dauerhaft gute Qualität des Espresso-Kaffees zu entfernen.

In der US 5,888,313 ist ein Reinigungsbeutel mit einer oberen und unteren Filterlage aus Teebeutelpapier zur Reinigung von Kaffee- und Teemaschinen beschrieben. Die beiden Filterlagen sind miteinander versiegelt und bilden den Beutel. In dem Reinigungsbeutel ist eine pulverförmige Reinigungsmittelzusammensetzung aufgenommen. Neben den hochwirksamen Reinigungschemikalien Trinatriumphosphat und Natriummetasilikat beinhaltet die Reinigungssubstanz auch Soda. Während des Reinigungsprozesses reagiert das Soda unter Brause- bzw. Schaumbildung mit Wasser und verstärkt dadurch den Reinigungsprozess. Der Reinigungsbeutel ist jedoch nur für Filtermaschinen geeignet. Für Heissgetränkesysteme, welche unter Druck das Heissgetränk zubereiten, ist der Reinigungsbeutel ungeeignet bzw. ineffizient, da sich die gesamte Reinigungsmittelzusammensetzung vollständig in dem Brühwasser auflöst und sich in der Druckkammer kein Druck aufbauen kann, wie das der Fall ist, wenn sich Kaffee in der Brühkammer befindet. Die Reinigungssubstanzen können daher in einem solchen Heissgetränkesystem nicht alle Bereiche erreichen, welche während der Heissgetränkezubereitung verunreinigt werden. Auch läuft das Teebeutelpapier Gefahr zu reissen, wodurch es nach der Reinigung nur mühsam aus der Filtermaschine entfernbar ist

### Aufgabe der Erfindung

Aufgabe der vorliegenden Erfindung ist es daher, eine Lösung zu zeigen, mit der ein Heissgetränksystem, insbesondere eine Portionskaffeemaschine, welche unter Druck den Kaffee zubereitet, rasch, vollständig und sicher von Kaffeerückständen und von anderen nicht wasserlöslichen Rückständen befreit werden kann. Noch eine Aufgabe ist es eine Reinigungskapsel vorzuschlagen, welche wenigstens dieselbe Stabilität wie herkömmliche Kapseln, welche der Zubereitung von Heissgetränken dienen, aufweisen.

### Beschreibung

Erfindungsgemäss wird die Aufgabe bei einer Vorrichtung gemäss Oberbegriff des Anspruchs 1 dadurch gelöst, dass die Reinigungskapsel in dem Hohlraum zusätzlich zu dem Reinigungsmittel einen chemisch inerten Füllstoff enthält, wodurch der Hohlraum dauerhaft auch während des Reinigungsprozesses mit dem Füllstoff gefüllt ist. Wenn im Rahmen dieses Dokuments von einem chemisch inerten Füllstoff die Rede ist, so ist damit ein Stoff gemeint, der den Hohlraum der Kapsel passiv ohne jegliches Zusammenwirken mit anderen in dem Hohlraum anwesenden chemischen Substanzen ausfüllt. Der Füllstoff ist daher reaktionsneutral bzw. unreaktiv und stabil gegenüber den unter den gegebenen Bedingungen potentiellen Reaktionspartnern, wie den Reinigungsmitteledukten und -produkten, Wasser und Luft. Das benötigte Reinigungsmittel für das Reinigen der Brühkammer nimmt lediglich ein geringes Volumen in Anspruch und füllt den Hohlraum nicht aus. Damit das Reinigungsmittel aber alle Bereiche einer Brühkammer erreicht, welche auch von einem Kaffeegetränk erreicht werden, sind die Durchströmungsverhältnisse in der Reinigungskapsel an eine Kaffeekapsel anzupassen. Denkbar ist es natürlich auch, die Durchströmungsverhältnisse in der Reinigungskapsel an eine Kapsel zur Herstellung eines anderen Heissgetränks, wie Tee, Kakao oder Suppe anzupassen, falls das Heissgetränkesystem vorrangig zur Herstellung eines anderen Heissgehänkes als Kaffee benutzt werden sollte. Für diesen Zweck ist in den Hohlraum der inerte Füllstoff eingefüllt. Da der Füllstoff inert ist, reagiert er bevorzugt weder mit Wasser noch mit dem Reinigungsmittel oder nur in verschwindend geringem Ausmass. Der Füllstoff hat bei Kontakt mit Wasser im Wesentlichen dieselben Durchströmungseigenschaften wie der Kaffeesatz. Das im Brühwasser aufgelöste Reinigungsmittel erreicht daher alle Bereiche der Brühkammer, welche während der Kaffeezubereitung verunreinigt wurden. Ferner hält der Füllstoff die Reinigungskapsel während des Reinigungsvorgangs stabil, da in der Reinigungskapsel durch den Füllstoff kein leerer Raum in der Reinigungskapsel vorhanden ist. Der Füllstoff verhindert daher auch eine unerwünschte Verformung, beispielsweise ein Einbeulen der Reinigungskapsel.

Wenngleich es bevorzugt ist, dass der Füllstoff ein Feststoff ist, ist es auch denkbar, dass der Füllstoff einen anderen Aggregatszustand besitzt. So kann in dem Kapselhohlraum neben dem Reinigungsmittel auch ein flüssiger oder ein gasförmiger Füllstoff vorgesehen sein.

In einer bevorzugten Ausführungsform ist der Füllstoff ein Feststoff, welcher bei Kontakt mit Wasser quellbar ist. Dieses technische Merkmal bewirkt, dass der Hohlraum von dem Füllstoff bei Kontakt mit Wasser ausgefüllt wird und der aufgequollene Füllstoff eine vergleichbare Struktur wie der in einer Kapsel aufgequollene Kaffeesatz erhält.

Zweckmässigerweise besitzt der Füllstoff bei keiner räumlichen Einschränkung bei Kontakt mit Wasser ein Volumen, welches grösser als das Volumen des Hohlraums ist. Die Füllmenge des Füllstoffs in der Kapsel ist derart bemasst, dass wenn sich der Füllstoff nicht in dem Kapselhohlraum befindet, durch Wasserkontakt auf ein Volumen aufquillt, das das Volumen des Kapselhohlraums übersteigt. Der Füllstoff wird deshalb in dem geschlossenen Hohlraum komprimiert und setzt dem die Reinigungskapsel durchströmenden Brühwasser einen Strömungswiderstand entgegen, welcher mit dem einer Kaffeekapsel vergleichbar ist. Durch die gewählten Korngrössen, die Korngrössenverteilung und die Porosität des Füllstoffs ist der Strömungswiderstand der Reinigungskapsel an den Strömungswiderstand einer Kaffeekapsel anzupassen. Diese Anpassung erfolgt durch Versuchsreihen mit variierenden Stoffeigenschaften des inerten Füllstoffs.

Mit Vorteil ist der Füllstoff ohne räumliche Einschränkung bei Kontakt mit Wasser auf das 1,1 fache bis 1,8 fache, bevorzugt auf das 1,2 bis 1,6 fache und besonders bevorzugt auf das 1,3 fache bis 1,4 fache seines Trockenvolumens quellbar. Diese Werte entsprechen in etwa dem Quellvermögen von gemahlenem Kaffee und sind daher auf die Quelleigenschaften des Füllstoffs übertragen.

Als vorteilhaft erweist es sich, wenn der Durchströmungswiderstand der Reinigungskapsel im Wesentlichen dem Durchshömungswiderstand einer mit gemahlenem Kaffee gefüllten Kapsel entspricht. Wie vorstehend erwähnt, kann durch dieses technische Merkmal sichergestellt werden, dass das im Brühwasser aufgelöste Reinigungsmittel den selben Weg wie ein gebrühter Kaffee durch die Brühkammer nimmt und dadurch alle verschmutzen Bereiche der Brühkammer erreicht.

Zweckmässigerweise ist der Füllstoff ein wasserunlöslicher anorganischer oder organischer Stoff, insbesondere ein organischer Stoff, welcher aus organischen Fasern zusammengesetzt ist, oder ein Kunststoff. Zu den anorganischen Stoffen zählt auch ein mineralischer Füllstoff wie Sand oder Tongranulat. Als organische natürliche Stoffe kommen beispielsweise Zellulose, gemahlene Getreideschalen oder Spelzen in Frage, da diese Quelleigenschaften ähnlich wie Kaffeepulver besitzen und biologisch abbaubar sind. Auch Styropor oder ein Kunststoffgranulat sind denkbar. Allen diesen Füllstoffen ist gemein, dass sie sich gegenüber dem Brühwasser bzw. dem in dem Brühwasser aufgelösten Reinigungsmittel inert verhalten. Als vorteilhaft erweist es sich, wenn der Füllstoff eine grössere oder geringere Dichte als Kaffeepulver besitzt, sodass der Benutzer aus haptischen Gründen sofort erkennt, dass es sich um keine Kaffeekapsel handelt.

Bevorzugt ist der Füllstoff ein Granulat. Dadurch kann das Brühwasser gleichmässig verteilt durch die Reinigungskapsel strömen und es bilden sich keine Verwirbelungen der Reinigungsflüssigkeit.

In einer besonders bevorzugten Ausführungsform wirkt der Füllstoff als ein Trägerstoff für das Reinigungsmittel. Typischerweise besitzt das Reinigungsmittel eine Schütt -dichte, welche sich von der Schüttdichte des Füllstoffs unterscheidet. Dadurch kommt es zur Entmischung und das Reinigungsmittel ist in dem Hohlraum ungleichmässig verteilt. Dies ist unerwünscht, da es durch die Separierung des Reinigungsmittels zu einer ungleichmässigen Auflösung des Reinigungsmittels in dem Brühwasser kommen kann. Eine Abhilfe für dieses Problem kann geschaffen werden, indem das Reinigungsmittel auf dem Füllstoffgranulat aufgebracht ist, wodurch das Reinigungsmittel an dem Füllstoffgranulat haftet.

Als vorteilhaft erweist es sich, wenn das Reinigungsmittel auf die Oberfläche des Füllstoffs aufgebracht ist. Dann lässt sich das Reinigungsmittel durch einfaches Aufsprühen auf den Füllstoff auftragen, haftet an dem Füllstoff und ist nach dem Trocknungsschritt gleichmässig verteilt. Da das Brühwasser die Oberfläche des Füllstoffs nahezu vollständig umspült, wird das Reinigungsmittel auch vollständig aus der Reinigungskapsel herausgespült.

In einer weiteren Ausführungsform weist die Reinigungskapsel eine verstärkte Kapselhülle auf, welche die stabilisierende Wirkung des Füllstoffs auf die Reinigungskapsel ersetzt. Eine Verformung der Hülle der Reinigungskapsel, beispielsweise ein Einbeulen, ist durch dieses Merkmal auch dann verhindert, wenn der Füllstoff die Kapselhülle nicht von innen stützt.

In einem weiteren bevorzugten Ausführungsbeispiel setzt das Reinigungsmittel bei Kontakt mit Wasser Sauerstoff frei. Da Sauerstoff ein starkes Oxidationsmittel ist, werden Verunreinigungen reduziert und die Brühkammer desinfiziert.

Als vorteilhaft erweist es sich, wenn das Reinigungsmittel chemische Verbindungen, insbesondere Komplexbildner, enthält, welche mit Kalk eine Verbindung eingehen. Dadurch werden auch Verkalkungsrückstände in der Brühkammer entfernt.

Zweckmässigerweise beträgt die Reinigungsmittelmenge in dem Kapselhohlraum weniger als 3 g, bevorzugt weniger als 2 g und besonders bevorzugt weniger als 1,5 g. Diese Dosierung an Reinigungsmittel stellt sicher, dass das gesamte Reinigungsmittel während eines Spülvorgangs in dem Brühwasser aufgelöst wird. Auch ist sicher zu stellen, dass das Reinigungsmittel nicht überdosiert wird und eine Reinigungsmittelkonzentration in dem Brühwasser vorhanden ist, welche gerade ausreicht um die Verunreinigungen in der Brühgruppe zu beseitigen.

Mit Vorteil besitzt die Zusammensetzung aus Füllstoff und Reinigungsmittel eine Schüttdichte, welche entweder kleiner als 1 g/cm³, bevorzugt kleiner als 0,7 g/cm³ und besonders bevorzugt kleiner als 0,5 g/cm³ ist oder grösser als 2 g/cm³, bevorzugt grösser als 3 g/cm³ und besonders bevorzugt grösser als 4 g/cm³ ist. Durch diese Wahl der Dichte wird einem Benutzer einer Reinigungskapsel unmittelbar klar, dass es sich nicht um eine Kaffeekapsel handelt, da die Reinigungskapsel viel schwerer oder leichter als eine Kaffeekapsel ist.

Als zweckmässig erweist es sich, wenn die Reinigungskapsel eingefärbt ist, insbesondere in einer für Heissgetränke untypischen Signalfarbe wie rot, grün oder violett. Dem Benutzer der Reinigungskapsel wird dadurch signalisiert, dass er eine Reinigungskapsel in die Maschine einlegt und keine Kaffeekapsel.

In einer weiteren bevorzugten Ausführungsform enthält der Inhalt des Holraums neben dem Reinigungsmittel und dem Füllstoff eine wasserlösliche Lebensmittelfarbe. Ein Benutzer wird die Reinigungsflüssigkeit daher niemals versehentlich trinken, weil diese eine Farbe besitzt, welche sofort ins Auge springt und sich von der Farbe eines Kaffees unterscheidet.

Diese Lebensmittelfarbe kann mit Vorteil Chlorophyll sein, da dieses eine kräftige grüne Farbe besitzt und zusätzlich eine Geruchs- und Geschmacksneutralität bewirkt. Letztgenannte Eigenschaften des Chlorophylls wirken sich positiv auf Heissgetränke aus, welche nach der Reinigung zubereitet werden.

Als weitere Sicherheitsvorkehrung ist die Reinigungskapsel in einer Folie, bevorzugt in einer Signalfarbe eingefärbt, verpackt. Der Benutzer der Reinigungskapsel muss daher einen zusätzlichen Auspackschritt bewusst ausführen, was ihn darauf hinweist, dass es sich um eine Reinigungskapsel und um keine Kaffee- bzw. Heissgetränkekapsel handelt.

Zweckmässigerweise nimmt der Füllstoff wenigstens 90 % des Hohlraumvolumens, bevorzugt wenigstens 95 % des Hohlraumvolumens und besonders bevorzugt wenigstens 97 % des Hohlraumvolumens ein. Dadurch lässt sich nach Quellen des Füllstoffs ein Innendruck in dem Hohlraum aufbauen, wodurch dem durchströmenden Brühwasser ein Widerstand entgegengesetzt wird, welcher dem Durchströmungsgegenstand einer Heissgetränkekapsel entspricht.

Als vorteilhaft erweist es sich, wenn in dem Hohlraum eine derartige Menge an Reinigungsmittel vorgesehen ist, dass in einem vorbestimmten Brühwasservolumen eine Reinigungsmittelkonzentration von 0,3 bis 2 Gew.-%, bevorzugt von 0,4 bis 1,5 Gew.-% und besonders bevorzugt von 0,5 bis 1 Gew.-% herstellbar ist. Eine derartige Reinigungsflüssigkeit ist ausreichend hoch konzentriert, um die in der Brühkammer entstehenden Verunreinigungen zuverlässig zu beseitigen. Auch ist in diesem Gew% Bereich eine Überdosierung an Reinigungsmittel nicht gegeben.

Als vorteilhaft erweist es sich, wenn das vorbestimmte Brühwasservolumen der 0,5 bis 3 fachen Menge, bevorzugt der 0,7 bis 2 fachen Menge und besonders bevorzugt der 0,9 bis 1,1 fachen Menge entspricht, welche durch eine Kapsel mit Extraktionsgut geleitet wird. Die Benutzung der Reinigungskapsel ist daher besonders einfach, da sich die benötigte Menge an Brühwasser bevorzugt nicht von der Menge unterscheidet, welche zur Herstellung eines Heissgetränks benötigt wird. So kann die benötigte Brühwassermenge zur Reinigung der Brühgruppe beispielsweise dem Volumen einer Kaffeetasse entsprechen.

Ein weiterer Aspekt der Erfindung betrifft die Verwendung einer Reinigungskapsel in der Brühgruppe eines Heissgetränkesystems für die Reinigung, insbesondere für die Zwischenreinigung bei einem Wechsel von einer Art des herzustellenden Heissgetränks zu einer anderen Art. Dadurch können Übergänge der Geschmacksrichtungen eines Heissgetränks in ein Heissgetränk einer anderen Art bei einem Wechsel der Heissgetränkeart verhindert werden. So kann beispielsweise Suppen- oder Kakaogeschmack in einem darauffolgend zubereiteten Kaffeegetränk durch eine Zwischenreinigung mit der Reinigungskapsel vollständig verhindert werden. Die Anwendung der erfindungsgemässen Reinigungskapsel ist jedoch nicht auf Heissgetränkesysteme alleine beschränkt. Die Reinigungskapsel lässt sich auch an Getränkesysteme anpassen, mit welchen neben Heiss- auch Kaltgetränke (z.B. Eistee oder kalter Kaffee) herstellbar sind.

Weitere Vorteile und Merkmale ergeben sich aus der nachfolgenden Beschreibung eines Ausführungsbeispiels der Erfindung. Die erfindungsgemässe Reinigungskapsel umfasst ein Basiselement, bevorzugt in kegelstumpfförmiger Gestalt, einen Boden und einen von dem Basiselement und dem Boden definierten Hohlraum. Im Rahmen dieses Dokuments soll der Begriff Kapsel alternativ auch für andere Verpackungsformen stehen, welche sich zur Aufnahme in der Brühkammer eines Heissgetränkesystems und insbesondere eines Kaffeeautomaten eignen. Als Verpackungsformen sind nicht abschliessend Pads und Filtersäcke denkbar, sofern der Inhalt der Reinigungskapsel vor deren Anwendung nicht aus dem Hohlraum austritt. Unter den Begriff Heissgetränkesystem fallen nicht nur Maschinen zur Herstellung eines Kaffeegetränks, sondern damit können auch andere heisse Getränke wie Tee, Kakao oder Suppe hergestellt werden.

Die Heissgetränkesysteme verkalken nicht nur durch den ständigen Durchlauf von Leitungswasser sondern deren Brühgruppe verschmutzt auch durch den Durchlauf des jeweiligen Heissgetränks. Insbesondere Kaffeefette haften mit fortwährender Benutzung an den benetzten Teilen der Brühgruppe. Diese Rückstände beeinträchtigen nicht nur die Funktion der Brühgruppe, sondern wirken sich auch negativ auf den Geschmack des Heissgetränks aus. Die erfindungsgemässe Reinigungskapsel ist dafür vorgesehen, vorstehend beschriebene Rückstände in der Brühgruppe möglichst vollständig zu entfernen. Zu diesem Zweck ist in dem Hohlraum neben einem speziell auf die Entfernung solcher Rückstände abgestimmten Reinigungsmittel ein Füllstoff vorgesehen. Wie der Name schon sagt dient der Füllstoff der Auffüllung des Hohlraums, was mit Reinigungsmittel alleine nicht gelingen würde, ohne das Reinigungsmittel überdosieren oder verdünnen zu müssen.

Der Füllstoff ist gegenüber dem Brühwasser inert also wasserunlöslich. Für diesen Zweck sind Granulate organischer aber auch anorganischer Natur denkbar. Dazu zählen nicht abschliessend Spelzen, Schalen, Zellstoff, Styroporgranulat, Kunststoffgranulat, aber auch Sand, Schlacke, Holzfasern, andere Faserstoffe usw. Für eine gleichmässige Durchströmung der Reinigungskapsel mit Brühwasser ist es zweckmässig, wenn die einzelnen Partikel des Füllstoffs im Wesentlichen gleich gross sind. Ein besonders guter Reinigungserfolg wird erzielt, wenn die Reinigungskapsel einen im Wesentlichen gleichen Durchströmungswiderstand besitzt, wie eine mit gemahlenem Kaffee gefüllte Kapsel. Dadurch ist es ermöglicht, dass das mit Reinigungsmittel versetzte Brühwasser zu allen Verunreinigungen in der Brühgruppe gelangt. Es versteht sich, dass der Durchströmungswiderstand der Reinigungskapsel auch an Kakaopulver, Tee oder Suppenpulver angepasst sein kann, falls die Maschine primär zu deren Herstellung dient. Um einen entsprechenden Durchströmungswiderstand zu erreichen ist es von Vorteil, wenn der Füllstoff die gleichen oder ähnliche Quelleigenschaften wie gemahlener Kaffee besitzt. Die Quellfähigkeit des Füllstoffes liegt bei Wasserkontakt zweckmässigerweise beim 1,1 fachen bis 1,8 fachen des Trockenvolumens.

Da das Reinigungsmittel typischerweise eine Dichte besitzt, welche sich von der Dichte des Füllstoffs unterscheidet, neigen Reinigungsmittel und Füllstoff dazu, sich in dem Hohlraum zu entmischen bzw. zu segregieren. Um einer Entmischung entgegenzuwirken, ist es bevorzugt, dass das Reinigungsmittel mit dem Füllstoff verbunden ist, also als Trägerstoff für den Füllstoff fungiert. So kann das Reinigungsmittel auf die Füllstoffpartikel aufgesprüht sein und löst sich bei Kontakt mit Brühwasser in selbigem auf.

Das Reinigungsmittel soll einerseits eine möglichst grosse Bandbreite an Verunreinigungen lösen und selbst bei Trinken der Reinigungsflüssigkeit nicht gesundheitsschädlich sein. Zu den Inhaltstoffen des Reinigungsmittels zählen Tenside, Inhaltsstoffe welche bei Kontakt mit Wasser Sauerstoff freisetzen und kalklöende Komplexbildner. Das Reinigungsmittel ist derart dosiert, dass es durch einen Spülvorgang im Wesentlichen vollständig aus der Reinigungskapsel entfernt wird und nach einem Brühwasserdurchlauf nur mehr der Füllstoff in der Reinigungskapsel vorhanden ist. Ein weiterer Brühwasserdurchlauf kann daher für Spülzwecke der Brühgruppe verwendet werden. Beim Spülen der Brühgruppe kann die Reinigungskapsel in der Brühgruppe verbleiben, kann vor dem Spülvorgang jedoch auch entfernt werden. Die Zusammensetzung und die Menge der Inhaltsstoffe sind an das jeweilige der zahlreichen sich am Markt befindlichen Getränkesysteme angepasst. Auch dient die Reinigungskapsel der Durchführung einer Zwischenreinigung, wenn von einer Getränkesorte auf eine andere gewechselt wird. Ein unerwünschter Geschmacksübergang von einem zuvor zubereiteten Heissgetränk einer anderen Sorte lässt sich demnach verhindern.

Um einen sicheren Gebrauch der erfindungsgemässen Reinigungskapsel zu gewährleisten, ist eine Mehrzahl von Sicherheitsmerkmalen vorgesehen. Dazu zählen, dass die Reinigungskapsel in einer Signalfarbe eingefärbt ist, welche sich in der Farbe eindeutig von den Kapselfarben unterscheidet, in denen Heissgetränkepulver, insbesondere Kaffeepulver abgefüllt ist. In dem Hohlraum kann zusätzlich zu dem Reinigungsmittel und dem Füllstoff ein gesundheitlich unbedenklicher Farbstoff aufgenommen sein, welcher die die Brühgruppe verlassende Flüssigkeit auffällig einfärbt. Weiterhin unterscheidet sich das Gewicht der Reinigungskapsel signifikant vom Gewicht der Heissgetränkekapseln, ist also leichter oder schwerer als eine Heissgetränkekapsel. Zudem kann die Reinigungskapsel zusätzlich einzeln verpackt sein, beispielsweise in einer signalfarbigen Folie. Der Benutzer erkennt daher auch aus haptischen Gründen, dass es sich um die Reinigungskapsel handelt. Die mehrfache Absicherung führt dazu, dass ein versehentliches Trinken des Extrakts der Reinigungskapsel verhindert ist. Sollte es trotzdem zu einem versehentlichen Verschlucken des Extrakts kommen, so wirkt sich dies maximal reizend aus, ist vom gesundheitlichen Aspekt jedoch unbedenklich.

## Patentansprüche

1. Reinigungskapsel zur Aufnahme in der Brühgruppe eines Heissgetränksystems, insbesondere einer Kaffeemaschine, mit einem Hohlraum, welcher Hohlraum ein Reinigungsmittel beinhaltet,
**dadurch gekennzeichnet,**
**dass** die Reinigungskapsel in dem Hohlraum zusätzlich zu dem Reinigungsmittel einen chemisch inerten Füllstoff enthält, wodurch der Hohlraum dauerhaft auch während des Reinigungsprozesses mit dem Füllstoff gefüllt ist.

2. Reinigungskapsel nach Anspruch 1, **dadurch gekennzeichnet, dass** der Füllstoff ein Feststoff ist, welcher durch Kontakt mit Wasser quellbar ist.

3. Reinigungskapsel nach Anspruch 1, **dadurch gekennzeichnet, dass** der Füllstoff ohne räumliche Einschränkung bei Kontakt mit Wasser ein Volumen besitzt, welches grösser als das Volumen des Hohlraums ist.

4. Reinigungskapsel nach einem der Ansprüche 2 bis 3, **dadurch gekennzeichnet, dass** der Füllstoff ohne räumliche Einschränkung bei Kontakt mit Wasser auf das 1,1 fache bis 1,8 fache, bevorzugt auf das 1,2 bis 1,6 fache und besonders bevorzugt auf das 1,3 fache bis 1,4 fache seines Trockenvolumens quellbar ist.

5. Reinigungskapsel nach einem der Ansprüche 1 bis 4, **dadurch gekennzeichnet, dass** der Durchströmungswiderstand der Reinigungskapsel im Wesentlichen dem Durchströmungswiderstand einer mit gemahlenem Kaffee gefüllten Kapsel entspricht.

6. Reinigungskapsel nach einem der Ansprüche 1 bis 5, **dadurch gekennzeichnet, dass** der Füllstoff ein wasserunlöslicher anorganischer oder organischer Stoff, insbesondere ein organischer Stoff, welcher aus organischen Fasern zusammengesetzt ist, oder ein Kunststoff ist.

7. Reinigungskapsel nach einem der Ansprüche 1 bis 6, **dadurch gekennzeichnet, dass** der Füllstoff ein Granulat ist.

8. Reinigungskapsel nach einem der Ansprüche 1 bis 7, **dadurch gekennzeichnet, dass** der Füllstoff als ein Trägerstoff für das Reinigungsmittel wirkt.

9. Reinigungskapsel nach einem der Ansprüche 1 bis 8, **dadurch gekennzeichnet, dass** die Reinigungskapsel eine verstärkte Kapselhülle aufweist, welche die stabilisierende Wirkung des Füllstoffs auf die Reinigungskapsel ersetzt.

10. Reinigungskapsel nach einem der Ansprüche 1 bis 9, **dadurch gekennzeichnet, dass** das Reinigungsmittel bei Kontakt mit Wasser Sauerstoff frei setzt.

11. Reinigungskapsel nach einem der Ansprüche 1 bis 10, **dadurch gekennzeichnet, dass** das Reinigungsmittel chemische Verbindungen, insbesondere Komplexbildner, enthält, welche mit Kalk eine Verbindung eingehen.

12. Reinigungskapsel nach einem der Ansprüche 1 bis 11, **dadurch gekennzeichnet, dass** die Reinigungsmittelmenge in dem Kapselhohlraum weniger als 3 g, bevorzugt weniger als 2 g und besonders bevorzugt weniger als 1,5 g beträgt.

13. Reinigungskapsel nach einem der Ansprüche 1 bis 12, **dadurch gekennzeichnet, dass** der Inhalt des Holraums neben dem Reinigungsmittel und dem Füllstoff eine wasserlösliche Lebensmittelfarbe, insbesondere Chlorophyll, enthält.

14. Reinigungskapsel nach einem der Ansprüche 1 bis 13, **dadurch gekennzeichnet, dass** der Füllstoff wenigstens 90 % des Hohlraumvolumens, bevorzugt wenigstens 95 % des Hohlraumvolumens und besonders bevorzugt wenigstens 97 % des Hohlraumvolumens einnimmt.

15. Verwendung einer Reinigungskapsel in der Brühgruppe eines Heissgetränkesystems gemäss einem der vorstehenden Ansprüche für die Reinigung, insbesondere für die Zwischenreinigung bei einem Wechsel der Art des herzustellenden Heissgetränks.

## Claims

1. Cleaning capsule for lodging in the brew group of a hot drink system, in particular of a coffee machine, with a hollow space, which hollow space contains a cleaning agent,
**characterized in that** the cleaning capsule contains in the hollow space a chemically inert filling agent additionally to the cleaning agent so that the hollow space is permanently filled with the filling agent, even during the cleaning process.

2. Cleaning capsule according to claim 1, **characterized in that** the filling agent is a solid material that is swellable through contact with water.

3. Cleaning capsule according to claim 1, **characterized in that** the filling agent has a volume through contact with water without spatial constraint that is bigger than the volume of the hollow space.

4. Cleaning capsule according to one of the claims 2 to 3, **characterized in that** the filling agent is swellable through contact with water without spatial constraint to 1,1 to 1,8 times of its dry volume, preferably to 1,2 to 1,6 times and particularly preferably to 1,3 to 1,4 times.

5. Cleaning capsule according to one of the claims 1 to 4, **characterized in that** the flow resistance of the cleaning capsule substantially corresponds to the flow resistance of a capsule filled with ground coffee.

6. Cleaning capsule according to one of the claims 1 to 5, **characterized in that** the filling agent is a water insoluble inorganic or organic substance, in particular an organic substance that is composed of organic fibers or that is a synthetic material.

7. Cleaning capsule according to one of the claims 1 to 6, **characterized in that** the filling agent is a granulate.

8. Cleaning capsule according to one of the claims 1 to 7, **characterized in that** the filling agent acts as a carrier material for the cleaning agent.

9. Cleaning capsule according to one of the claims 1 to 8, **characterized in that** the cleaning capsule has a reinforced capsule envelope that replaces the stabilizing action of the filling agent on the cleaning capsule.

10. Cleaning capsule according to one of the claims 1 to 9, **characterized in that** the cleaning agent releases oxygen when contacting water.

11. Cleaning capsule according to one of the claims 1 to 10, **characterized in that** the cleaning agent contains chemical combinations, in particular complexing agents that bond to calcium.

12. Cleaning capsule according to one of the claims 1 to 11, **characterized in that** the cleaning agent quantity in the capsule hollow space is less than 3 g, preferably less than 2 g and particularly preferably less than 1,5 g.

13. Cleaning capsule according to one of the claims 1 to 12, **characterized in that** the content of the hollow space contains besides the cleaning agent and the filling agent a water soluble food colouring, in particular chlorophyll.

14. Cleaning capsule according to one of the claims 1 to 13, **characterized in that** the filling agent takes in at least 90 % of the hollow space volume, preferably 95 % of the hollow space volume and particularly preferably 97 % of the hollow space volume.

15. Use of a cleaning capsule in the brew group of a hot drink system according to one of the preceding claims for the cleaning, in particular for the intermediate cleaning when changing the type of the hot drink to be prepared.

## Revendications

1. Capsule de nettoyage à loger dans le groupe d'ébouillantage d'un système de boisson chaude, en particulier d'une machine à café, avec un espace creux, lequel espace creux contient un nettoyant,
**caractérisée en ce que** la capsule de nettoyage contient dans l'espace creux, en plus du nettoyant un agent de remplissage chimiquement inerte si bien que l'espace creux est rempli de manière permanente avec l'agent de remplissage, même pendant le processus de nettoyage.

2. Capsule de nettoyage selon la revendication 1, **caractérisée en ce que** l'agent de remplissage est une matière solide qui peut gonfler au contact avec l'eau.

3. Capsule de nettoyage selon la revendication 1, **caractérisée en ce que** l'agent de remplissage possède, sans restriction d'espace, un volume au contact avec l'eau qui est plus grand que le volume de l'espace creux.

4. Capsule de nettoyage selon la revendication 1, **caractérisée en ce que** l'agent de remplissage peut gonfler, sans restriction d'espace, au contact avec l'eau à 1,1 fois à 1,8 fois son volume sec, de préférence à 1,2 à 1,6 fois et de manière tout particulièrement préférée à 1,3 fois à 1,4 fois.

5. Capsule de nettoyage selon la revendication 1, **caractérisée en ce que** la résistance à l'écoulement de la capsule de nettoyage correspond substantiellement à la résistance à l'écoulement d'une capsule remplie avec du café moulu.

6. Capsule de nettoyage selon l'une des revendications 1 à 5, **caractérisée en ce que** l'agent de remplissage est une matière anorganique ou organique non soluble dans l'eau, en particulier une matière organique qui est composée de fibres organiques ou qui est une matière synthétique.

7. Capsule de nettoyage selon l'une des revendications 1 à 5, **caractérisée en ce que** l'agent de remplissage est un granulé.

8. Capsule de nettoyage selon l'une des revendications 1 à 7, **caractérisée en ce que** l'agent de remplissage agit comme un support pour le nettoyant.

9. Capsule de nettoyage selon l'une des revendications 1 à 8, **caractérisée en ce que** la capsule de nettoyage présente une enveloppe de capsule renforcée qui remplace l'effet stabilisateur de l'agent de remplissage sur la capsule de nettoyage.

10. Capsule de nettoyage selon l'une des revendications 1 à 9, **caractérisée en ce que** le nettoyant libère de l'oxygène au contact avec de l'eau.

11. Capsule de nettoyage selon l'une des revendications 1 à 10, **caractérisée en ce que** le nettoyant contient des composés chimiques, en particulier des agents complexants qui font une liaison avec le calcaire.

12. Capsule de nettoyage selon l'une des revendications 1 à 11, **caractérisée en ce que** la quantité de nettoyant est de moins de 3 g, de préférence de moins de 2 g et de manière particulièrement préférée de moins de 1,5 g.

13. Capsule de nettoyage selon l'une des revendications 1 à 12, **caractérisée en ce que** le contenu de l'espace creux contient, en plus du nettoyant et de l'agent de remplissage, un colorant alimentaire soluble dans l'eau, en particulier du chlorophylle.

14. Capsule de nettoyage selon l'une des revendications 1 à 9, **caractérisée en ce que** l'agent de remplissage prend au moins 90 % du volume de l'espace creux, de préférence au moins 95 % du volume de l'espace creux et de manière particulièrement préférée au moins 95 % du volume de l'espace creux.

15. Utilisation d'une capsule de nettoyage dans le groupe d'ébouillantage d'un système de boisson chaude selon l'une des revendications précédentes pour le nettoyage, en particulier pour le nettoyage intermédiaire lors d'un changement du type de boisson chaude à préparer.
